# EUROPÄISCHE PATENTANMELDUNG

(11) **EP 2 388 537 A2**
(43) Veröffentlichungstag der Anmeldung: **23.11.2011**
(21) Anmeldenummer: 11163156.0
(22) Anmeldetag: 20.04.2011
(51) Int. Cl.: F24J 2/52

(54) **Montagefuss für Solarmodule sowie Montagesystem mit mehreren solcher Montagefüsse**

(30) Priorität: 17.05.2010 DE 102010029006
(71) Anmelder: HILTI Aktiengesellschaft, 9494 Schaan (LI)
(72) Erfinder: Wiedner, Christoph, 6800, Feldkirch (AT); Bragagna, Elio, 6822, Duens (AT); Kornfeld, Frank, 88131, Lindau (DE)

(57) **Zusammenfassung**

Die Erfindung betrifft einen Montagefuß (10, 10") für Solarmodule, mit einem Grundkörper (12), der wenigstens eine Standfläche (22) hat, mit welcher sich der Montagefuß (10, 10") an einem Untergrund (24) abstützen kann, einem vom Grundkörper (12) nach oben ragenden Schenkel (32) und einem oberen Auflager (14) für eine erste schräggestellte Modulplatte (16), welches am Schenkel (32), vorzugsweise an dessen freiem Ende, angeordnet ist, wobei der Schenkel (32) ein Lager (62) für ein Ballastelement (46), insbesondere eine aufgestellte Platte, bildet und/oder der Montagefuß eine Abstützfläche (64) für eine ein Ballastelement (46) tragende Querverbindungsstrebe (52) zum Verbinden von zwei in einer Querrichtung (30) benachbarten Montagefüßen (10, 10") aufweist.

Des Weiteren umfasst die Erfindung auch ein Montagesystem mit mehreren solcher Montagefüße (10).

## Beschreibung

Die Erfindung betrifft einen Montagefuß für Solarmodule sowie ein Montagesystem, insbesondere ein Flachdach-Montagesystem für Solarmodule, mit solchen Montagefüßen.

Solaranlagen erfreuen sich derzeit angesichts steigender Energiekosten, zahlreicher Förderprogramme für regenerative Energien und aktueller Diskussionen über die Folgen eines globalen Klimawandels sowohl aus ökonomischen als auch ökologischen Gründen wachsender Beliebtheit. Eigentümer von für Solaranlagen geeigneten Immobilien sind dabei stets bestrebt, den maximalen Energieertrag bei möglichst geringen Investitionen in die Solarmodule und einen "solargerechten" Umbau des Gebäudes zu erzielen.

Es hat sich gezeigt, dass Flachdächer für eine Nutzung durch Solaranlagen besonders geeignet sind, da in der Regel keine oder lediglich minimale bauliche Anpassungen am Gebäude selbst notwendig sind. Üblicherweise wird als Unterkonstruktion lediglich ein Montagesystem aufgebaut, um die Solarmodule schräg zu stellen und nach Süden hin auszurichten, wodurch der Wirkungsgrad und damit die Energieausbeute der Solaranlage deutlich ansteigen.

Um Schäden an der Dachhaut und der bei Flachdächern empfindlichen Dachabdichtung zu vermeiden, wird dieses Montagesystem üblicherweise installiert, ohne eine direkte Befestigung oder Verbindung zum Gebäude herzustellen. Die Sicherung des Montagesystems gegen Verschieben oder Abheben erfolgt über Ballast, wobei jedoch die maximale Traglast des Flachdachs zu beachten ist. Das als Unterkonstruktion dienende Montagesystem bildet somit einen Dachaufsatz, an dem die Solarmodule unter einem gewünschten Neigungswinkel befestigt werden.

Da die Traglast der Dächer limitiert ist, sind im Stand der Technik bereits Maßnahmen zur Ballastreduktion beschrieben, welche auf unterschiedliche Art und Weise schon in heute üblichen Montagesystemen umgesetzt sind.

Aus dem Stand der Technik bekannte Maßnahmen sind z.B. Verbindungselemente, welche einzelne Solarmodule oder Solarmodulreihen der Solaranlage zu einer großen Einheit verbinden, um bei auftretender Windlast unerwünschte Verschiebungen der Solarmodule zu verhindern. Ferner ist es durchaus üblich, Windabweiser einzusetzen, um auf die Solarmodule wirkende Abhebekräfte zu reduzieren.

Trotz dieser Maßnahmen muss das Montagesystem zur zuverlässigen Lagesicherung der Solarmodule bei Windlast beschwert werden, wobei das mitunter beachtliche Gewicht zumeist in Form von Ballastelementen aufgebracht wird. In einer bekannten Unterkonstruktion stützen sich beispielsweise die Montagefüße großflächig über Standplatten am Untergrund ab und bilden Auflageflächen für die Ballastelemente. Die große Auflagefläche der Montagefuß-Standplatten am Untergrund bringt dabei den Nachteil mit sich, dass die Montagefüße bei unebenem Untergrund relativ zueinander leicht verkippen und somit eine Montage der Solarmodule erschweren. Je nach Anordnung und Größe der Montagefuß-Standplatten bzw. Ballastelemente können diese zudem Stolperstellen für Monteure oder Wartungstechniker bilden.

Aufgabe der Erfindung ist es, einen möglichst einfachen und preiswert herstellbaren Montagefuß sowie ein Montagesystem für Solarmodule zu schaffen, welches eine verbesserte Ballastierung aufweist, mit geringem Aufwand auf einem Untergrund installiert werden kann und zudem eine einfache Montage der Solarmodule ermöglicht.

Erfindungsgemäß wird diese Aufgabe gelöst durch einen Montagefuß für Solarmodule, mit einem Grundkörper, der wenigstens eine Standfläche hat, mit welcher sich der Montagefuß an einem Untergrund abstützen kann, einem vom Grundkörper nach oben ragenden Schenkel, und einem oberen Auflager für eine erste schräggestellte Modulplatte, welches am Schenkel, vorzugsweise an dessen freiem Ende, angeordnet ist, wobei der Schenkel ein Lager für ein Ballastelement, insbesondere eine aufgestellte Platte, bildet und/oder der Montagefuß eine Abstützfläche für eine ein Ballastelement tragende Querverbindungsstrebe zum Verbinden von zwei in einer Querrichtung benachbarten Montagefüßen aufweist.

Eine solche Lagerung des Ballastelements ist hinsichtlich der Lastabtragung äußerst vorteilhaft, da auf die Solarmodule wirkende Abhebekräfte über das obere Auflager in den Schenkel eingeleitet und dort von der Gewichtskraft der unmittelbar am Schenkel gelagerten Ballastelemente kompensiert werden können. Eine Weiterleitung der Abhebekräfte, beispielsweise in biegesteif angeschlossene, ballastierte Standplatten, ist nicht notwendig. Da der Schenkel ein insbesondere als Aufnahme ausgebildetes Lager für das Ballastelement bildet, müssen die Ballastelemente nicht auf großflächigen Standplatten der Montagefüße verteilt werden. Folglich sind die Ballastelemente bei fertiggestellter Solaranlage weitgehend "versteckt" und bilden keine störenden Stolperstellen am Untergrund. Diese Vorteile ergeben sich auch bei einer Lagerung der auch hier vorzugsweise aufgestellt positionierten Ballastelemente in der Querverbindungsstrebe, die benachbarte Montagefüße miteinander verbindet.

In einer Ausführungsform weist der Montagefuß ein mit dem Grundkörper verbundenes, unteres Auflager für eine zur ersten Modulplatte nicht-koplanare, benachbarte, zweite schräggestellte Modulplatte auf. Das Lager für das Ballastelement, insbesondere der gesamte Schenkel mit dem Lager, erstreckt sich vorzugsweise vom unteren Auflager weg schräg nach oben, wodurch sich ein gewünschter Abstand zwischen zwei benachbarten Solarmodulreihen einstellen lässt.

Die gestellte Aufgabe wird im Übrigen auch gelöst durch ein erfindungsgemäßes Montagesystem, insbesondere ein Flachdach-Montagesystem für Solarmodule, mit mehreren der oben beschriebenen Montagefüße sowie wenigstens einem Ballastelement zur Beschwerung des Montagesystems, wobei das wenigstens eine Ballastelement am Schenkel der Montagefüße und/oder an wenigstens einer Querverbindungsstrebe zum Verbinden von zwei in einer Querrichtung benachbarten Montagefüßen gelagert ist.

Besonders vorteilhaft ist das Ballastelement in einer am Schenkel angeformten Aufnahme gelagert.

In einer Ausführungsform des Montagesystems ist, wie gesagt, wenigstens eine Querverbindungsstrebe zum Verbinden von zwei in einer Querrichtung benachbarten Montagefüßen vorgesehen, wobei die Querverbindungsstrebe ein Lager für einen unteren Rand des Ballastelements bildet. Die Querverbindungsstrebe übernimmt somit in vorteilhafter Weise zwei Funktionen, nämlich zum einen die Verbindung benachbarter Montagefüße in Querrichtung zur Bildung einer großen, modularen Systemeinheit, sowie zum anderen die Lagerung der Ballastelemente.

Zur optimierten Lagerung der Ballastelemente ließen sich auch zwei vertikal versetzte Querverbindungsstreben vorsehen, die zusammen das oder die Ballastelemente lagern. So könnte eine untere Strebe einen Rand eines Ballastelementes aufnehmen oder umschließen und eine obere Strebe als einfache Anlagefläche gegen Kippen wirken oder den oberen Rand des Ballastelements umschließen.

Das oder die Ballastelemente können einerseits nur direkt an den Montagefüßen oder nur an der oder den Querverbindungsstreben gelagert sein oder an den Montagefüßen und zusätzlich der/den Querverbindungsstreben.

Vorzugsweise ist das Ballastelement plattenförmig, insbesondere als Betonplatte ausgebildet und liegt auf einer Stirnseite aufgestellt an der Querverbindungsstrebe auf. Die Querverbindungsstrebe bildet somit ein vorteilhaftes Linienlager für aufgestellte Ballastplatten. Die stehende oder schräggestellte Lagerung der Ballastplatten ist im Vergleich zu einer liegenden Lagerung sehr platzsparend und damit weniger störend auf dem Untergrund.

Zweckmäßige Ausgestaltungen der Erfindung und deren Vorteile ergeben sich aus den Unteransprüchen.

Die Erfindung wird nachfolgend anhand einer bevorzugten Ausführungsform beschrieben, die in den beigefügten Zeichnungen dargestellt ist. In diesen zeigt:
- Figur 1 eine perspektivische Ansicht eines erfindungsgemäßen Montagefußes für Solarmodule;
- Figur 2 eine perspektivische Ansicht einer Solaranlage mit einem erfindungsgemäßen Montagesystem, das mehrere erfindungsgemäße Montagefüße aufweist;
- Figur 3 einen Ausschnitt aus einem erfindungsgemäßen Montagesystem für Solarmodule in perspektivischer Ansicht;
- Figur 4 eine Detailansicht des erfindungsgemäßen Montagesystems im Verbindungsbereich zwischen Grundkörper und Längsverbindungsstrebe;
- Figur 5 die Detailansicht gemäß Figur 4 ohne Längsverbindungsstrebe;
- Figur 6 eine Detailansicht des erfindungsgemäßen Montagesystems im Bereich eines hinteren Montagesystemendes; und
- Figur 7 eine weitere Detailansicht des erfindungsgemäßen Montagesystems im Bereich des hinteren Montagesystemendes bei eingesetztem Ballastelement.

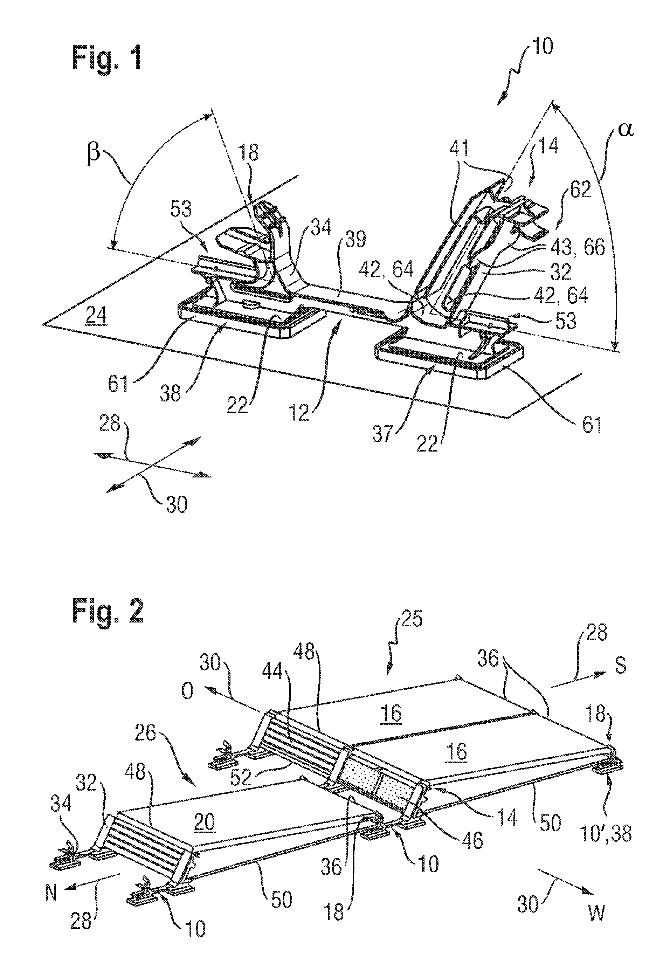

Die Figuren 1 und 2 zeigen einen Montagefuß 10 für Solarmodule, mit einem Grundkörper 12, einem mit dem Grundkörper 12 einstückig verbundenen oberen Auflager 14 für eine erste schräggestellte Modulplatte 16 und einem mit dem Grundkörper 12 einstückig verbundenen unteren Auflager 18 für eine zur ersten Modulplatte 16 nicht-koplanare, benachbarte, zweite schräggestellte Modulplatte 20. Der Grundkörper 12 hat wenigstens eine Standfläche 22, mit welcher sich der Montagefuß 10 an einem Untergrund 24, wie z.B. einer Dachhaut eines Flachdachs, abstützen kann. Das obere Auflager 14 weist dabei einen größeren Abstand zu einer von der Standfläche 22 aufgespannten Ebene auf als das untere Auflager 18.

Um die Funktion und Verwendung eines solchen Montagefußes 10 sowie den Unterschied zwischen ersten und zweiten Modulplatten 16, 20 zu verdeutlichen, ist in Figur 2 ein Ausschnitt einer Solaranlage 25 mit einem Montagesystem 26 für Solarmodule dargestellt, wobei das vorliegende Montagesystem 26 ein Flachdach-Montagesystem mit entsprechend horizontalem Untergrund 24 ist und mehrere Montagefüße 10 gemäß Figur 1 aufweist. Das Montagesystem 26 bildet zusammen mit den als Modulplatten 16, 20 ausgebildeten Solarmodulen die Solaranlage 25. Außer auf Flachdächern ist eine Verwendung des Montagesystems 26 auch auf Pultdächern mit geringer Dachneigung oder einem anderen Untergrund 24 mit geringer Neigung denkbar.

In seiner hauptsächlichen Funktion als Solarmodul-Träger stellt der Montagefuß 10 höhenversetzte Auflager 14, 18 für bis zu vier Modulplatten 16, 20 zur Verfügung. Des Weiteren übernimmt der Montagefuß 10 auch eine Verbindungsfunktion zwischen zwei Solarmodulreihen, sodass das Montagesystem 26, welches mehrere solcher Montagefüße 10 aufweist, mit minimalem Aufwand zu einer modularen Einheit verbunden werden kann und folglich keine unerwünschte Verschiebung einzelner Solarmodule oder einzelner Solarmodulreihen möglich ist.

Als Solarmodulreihe werden dabei mehrere benachbarte Modulplatten 16, 20 bezeichnet, die weitgehend koplanar ausgerichtet sind, das heißt im Wesentlichen in einer Ebene liegen. Im Gegensatz dazu sind die Modulplatten 16, 20 unterschiedlicher Solarmodulreihen nicht-koplanar angeordnet und liegen in unterschiedlichen, wenn auch zumeist parallelen Ebenen. Die Montagefüße 10 können universell eingesetzt werden und sind nicht auf bestimmte Modulplattenmaße eingeschränkt.

Das Montagesystem 26 umfasst mehrere relativ zu einer von der Standfläche 22 aufgespannten Ebene geneigte oder schräggestellte Solarmodule, welche gemäß Figur 2 in zwei Solarmodulreihen mit ersten Modulplatten 16 und zweiten Modulplatten 20 aufgeteilt sind, wobei in Figur 2 ist exemplarisch nur eine zweite Modulplatte 20 gezeigt ist.

Die Schrägstellung bzw. Neigung der Solarmodule ist in der Regel so ausgerichtet, dass eine Oberseite der Solarmodule nach Süden gewandt ist. Im Folgenden wird eine Neigungsrichtung der Solarmodule als Längsrichtung 28 des Montagesystems 26 definiert, sodass die Längsrichtung 28 bei einer fertiggestellten Solaranlage 25 gemäß Figur 2 üblicherweise der Nord-Süd-Richtung entspricht. Dementsprechend erstreckt sich eine Solarmodulreihe in einer Querrichtung 30, welche üblicherweise der West-Ost-Richtung entspricht.

Mit Bezug auf den Montagefuß 10 gemäß Figur 1 ist sowohl das obere Auflager 14 als auch das untere Auflager 18 am freien Ende eines vom Grundkörper 12 schräg nach oben ragenden Schenkels 32, 34 angeordnet.

Im vorliegenden Ausführungsbeispiel ist das freie Ende des Schenkels 34 mit dem unteren Auflager 18 als Gabellager zur Aufnahme eines (von Süden gesehen) vorderen Rands 36 der Modulplatte 16, 20 ausgebildet (vgl. auch Figur 2). Das Gabellager ist dabei so ausgeführt, dass es ein begrenztes Verschwenken der Modulplatte 16, 20 um das untere Auflager 18 zulässt, sodass der Montagefuß 10 in baugleicher Ausführung für unterschiedliche Neigungswinkel der Solarmodule verwendet werden kann.

Gemäß Figur 1 schließen beide Schenkel 32, 34 für die Auflager 14, 18 jeweils einen spitzen Winkel α, β mit der Standfläche 22 ein, wobei die Schenkel 32, 34 in Längsrichtung 28 jeweils voneinander weg gerichtet sind.

Insbesondere der Schenkel 32 des oberen Auflagers 14 ist vom unteren Auflager 18 weg gerichtet und schließt einen spitzen (Anstell-)Winkel α, das heißt einen Winkel von 0° < α < 90° mit der Standfläche 22 ein. Aufgrund des bei einer Windbelastung auftretenden Staudrucks liegt der Anstellwinkel α des Schenkels 32 vorzugsweise zwischen 50° und 80°. Anstellwinkel α ≥ 90° sind prinzipiell denkbar, aus dem oben genannten Grund allerdings nur in besonderen Ausnahmefällen sinnvoll.

Der Schenkel 34 des unteren Auflagers 18 ist in der Regel so kurz, dass sein Anstellwinkel β keinen nennenswerten Einfluss auf das Montagesystem 26 hat. Daher kann der in Figur 1 eingezeichnete Anstellwinkel β des Schenkels 34 auch Werte von β ≥ 90° annehmen.

Der Grundkörper 12 des Montagefußes 10 gemäß Figur 1 umfasst einen ersten Grundkörperabschnitt 37 mit dem Schenkel 32, einen zweiten Grundkörperabschnitt 38 mit dem Schenkel 34 und einen Verbindungssteg 39 zwischen den Grundkörperabschnitten 37, 38, wobei die Standfläche 22 im Bereich des Verbindungsstegs 39 unterbrochen ist. Mit anderen Worten gibt es zwei Standflächen 22, welche in vorteilhafter Weise unmittelbar an den Lasteinleitungsstellen der Schenkel 32, 34 des Montagefußes 10 angeordnet sind, sodass eine sichere Lastabtragung in den Untergrund 24 gewährleistet ist. Gegenüber einer einzigen, großen Standfläche 22 bietet diese Ausführungsform bei lokal sehr unebenem Untergrund 24 den Vorteil einer größeren Standsicherheit infolge geringerer Kippneigung.

Außerdem ermöglicht die unterbrochene Standfläche 22 eine Verlegung von Leitungen und Kabeln in Querrichtung 30 unmittelbar auf dem Untergrund 24, unterhalb des Verbindungsstegs 39. Durch wird die Gefahr einer Beschädigung der Leitungen oder Kabel minimiert.

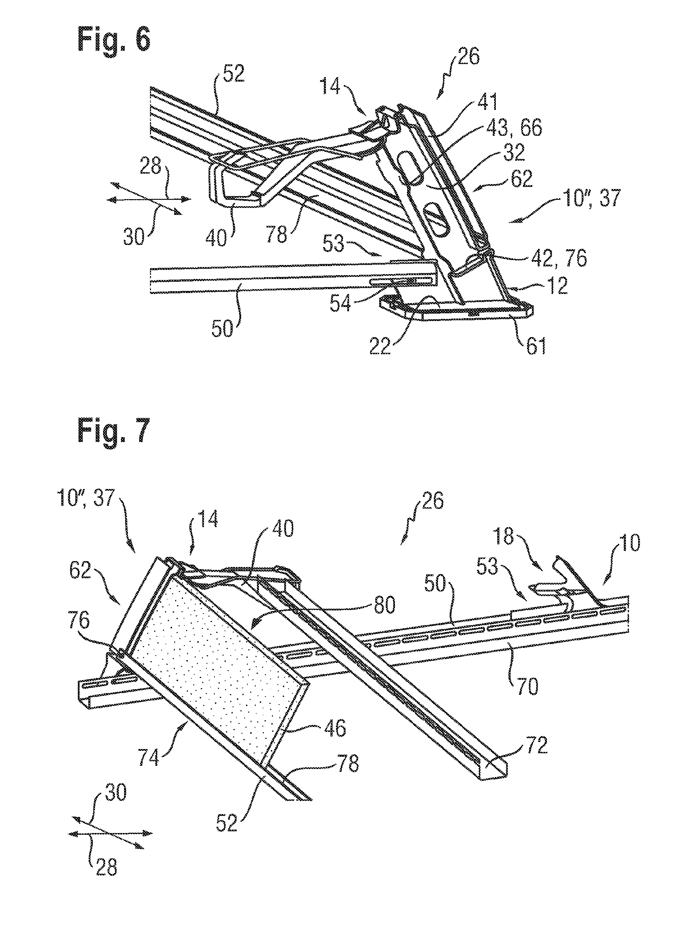

In einer alternativen Ausführungsvariante erfolgt die Verlegung der Leitungen und Kabel in Querrichtung 30 in einem Kabelkanal 72, der mittels einer Kabelkanalhalterung 40 am freien Ende des Schenkels 32 befestigt ist (vgl. Figuren 6 und 7). Die Leitungen und Kabel liegen in diesem Fall nach einer Fertigstellung der Solaranlage 25 geschützt unter den Solarmodulen.

Gemäß Figur 1 sind am Schenkel 32 des oberen Auflagers 14 Lagerabschnitte 41, 42, 43 für ein Windschott 44 und ein Ballastelement 46 (siehe auch Figur 2) zu sehen. Der Lagerabschnitt 41 für das Windschott 44 ist dabei eine Nut, welche sich in Längsrichtung des Schenkels 32 erstreckt und seitliche Enden des Windschotts 44 aufnehmen kann. Ein Anstellwinkel des Windschotts 44 entspricht somit dem Anstellwinkel α des Schenkels 32 mit dem oberen Auflager 14. Die Lagerabschnitte 42, 43 für das Ballastelement 46 sind als Abstützfläche 64 im Übergangsbereich zwischen dem Grundkörper 12 und dem Schenkel 32 bzw. als seitlich vorstehende Lagerzunge am Schenkel 32 ausgebildet. Die Lagerabschnitte 42, 43 sind dabei so angeordnet, dass ein Anstellwinkel der plattenförmigen Ballastelemente 46 im wesentlichen dem Anstellwinkel α des Schenkels 32 mit dem oberen Auflager 14 entspricht.

Aus den Figuren 1 und 2 geht außerdem hervor, dass in Querrichtung 30 gesehen am Montagefuß 10 nicht nur zwei Modulplatten 16, 20, sondern auch zwei Windschotte 44 und zwei Ballastelemente 46 aneinandergrenzen. Folglich weist der Schenkel 32 des oberen Auflagers 14 auf seinen in Querrichtung 30 entgegengesetzten Seiten jeweils Lagerabschnitte 41, 42, 43 für angrenzende Windschotte 44 und Ballastelemente 46 auf.

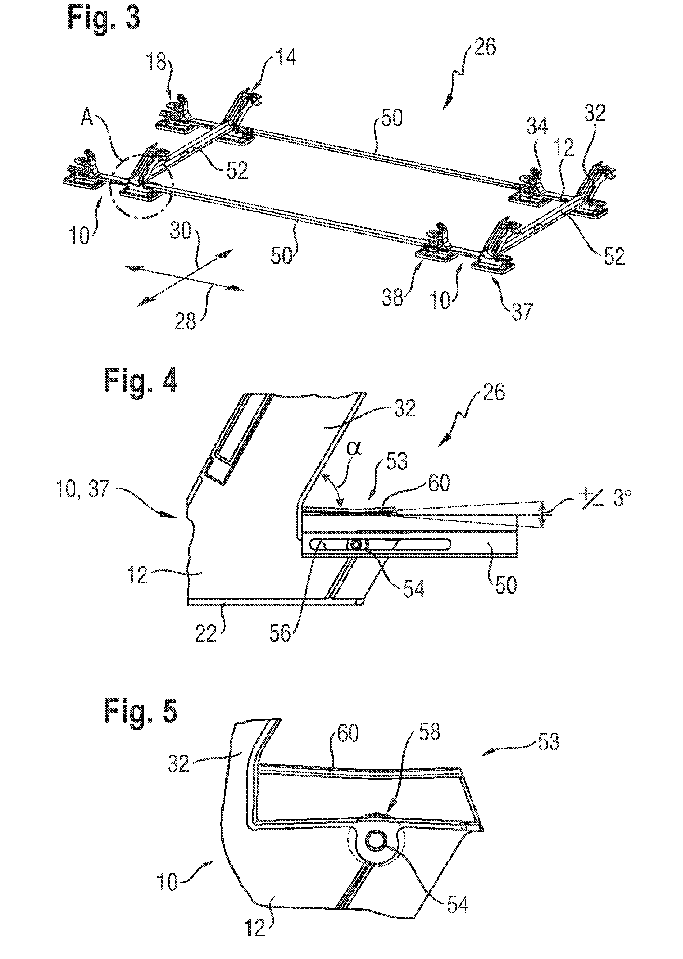

Das Montagesystem 26 weist in Figur 2, wie bereits erläutert, mehrere in Längsrichtung 28 hintereinander angeordneten Montagefüßen 10 auf, um den vorderen Rand 36 einer Modulplatte 16, 20 am unteren Auflager 18 eines vorderen Montagefußes 10 und einen hinteren Rand 48 dieser Modulplatte 16, 20 am oberen Auflager 14 eines hinteren Montagefußes 10 zu lagern. Darüber hinaus umfasst das Montagesystem 26 Längsverbindungsstreben 50 zum Verbinden von zwei in Längsrichtung 28 benachbarten Montagefüßen 10 sowie Querverbindungsstreben 52 zum Verbinden von zwei in Querrichtung 30 benachbarten Montagefüßen 10. Dieser prinzipielle Systemaufbau lässt sich insbesondere auch der Figur 3 entnehmen, in der ein Ausschnitt des Montagesystems 26 dargestellt ist. Die Längsverbindungsstreben 50 sind vorzugsweise aus Kunststoff hergestellt, können alternativ aber auch Metallstreben sein. Hingegen sind die Querverbindungsstreben 52 bevorzugt Metallstreben, insbesondere dann, wenn sie als Auflager für die Ballastelemente 46 dienen. Alternativ sind aber natürlich auch Querverbindungsstreben 52 aus Kunststoff denkbar.

Die Querverbindungsstreben 52 sind vorzugsweise rinnenförmig ausgebildet und erstrecken sich jeweils zwischen zwei benachbarten Montagefüßen 10, wobei die Enden jeder Querverbindungsstrebe 52 an den Montagefüßen 10 befestigt sind. Gemäß Figur 3 sind die Enden der Querverbindungsstrebe 52 in Ausnehmungen der Schenkel 32 eingesteckt und liegen am ebenfalls rinnenförmig ausgebildeten Lagerabschnitt 42 im Übergangsbereich zwischen Grundkörper 12 und Schenkel 32 auf (siehe auch Figur 6).

Die einzelnen Montagefüße 10 gemäß Figur 1 weisen jeweils höhenversetzte Auflager 14, 18 für bis zu vier Modulplatten 16, 20 auf, wobei in den Eck- und Randbereichen des Montagesystems 26 lediglich ein oder zwei Auflager 14, 18 genutzt werden. Insbesondere an dem von Süden gesehen vorderen Ende des Montagesystems 26 werden entsprechend angepasste Montagefüße 10' verwendet, welche im wesentlichen nur aus dem zweiten Grundkörperabschnitt 38 mit den unteren Auflagern 18 bestehen (vgl. Figur 2). Um auch diese angepassten Montagefüße 10' in Querrichtung 30 fixieren zu können, ist hier der Lagerabschnitt 42 zur Aufnahme einer Querverbindungsstrebe 52 ausnahmsweise im Übergangsbereich zwischen dem Grundkörper 12 und dem Schenkel 34 des unteren Auflagers 18 ausgebildet. Auch am hinteren Ende des Montagesystems 26 können angepasste Montagefüße 10" verwendet werden, welche im wesentlichen nur aus dem ersten Grundkörperabschnitt 37 mit den oberen Auflagern 14 bestehen (vgl. Figur 6).

Die Figur 4 zeigt eine Detailansicht A des Montagesystems 26 in einem Verbindungsbereich zwischen Montagefuß 10 und Längsverbindungsstrebe 50, wobei dieser Verbindungsbereich zur Orientierung in Figur 3 gestrichelt eingekreist ist. In Verbindung mit Figur 1 wird klar, dass der Grundkörper 12 des Montagefußes 10 an seinen in Längsrichtung 28 gegenüberliegenden Enden jeweils einen Befestigungsabschnitt 53 für eine Längsverbindungsstrebe 50 aufweist.

Um unterschiedliche Abstände von hintereinanderliegenden Montagefüßen 10 einstellen zu können, ist zwischen der Längsverbindungsstrebe 50 und dem Grundkörper 12 ein Befestigungsmittel 54 vorgesehen ist, das eine Arretierung von Montagefuß 10 und Längsverbindungsstrebe 50 in Längsrichtung 28 an unterschiedlichen Positionen erlaubt. Das Befestigungsmittel 54 umfasst im vorliegenden Fall eine Schraube, die mit einem Langloch 56 in der Längsverbindungsstrebe 50 zusammenwirkt, um eine in Längsrichtung 28 variable Arretierung zu ermöglichen.

Die Figur 5 zeigt die Detailansicht gemäß Figur 4, allerdings ohne die Längsverbindungsstrebe 50. Dadurch ist der Befestigungsabschnitt 53 des Grundkörpers 12 im Detail zu sehen und gut zu erkennen, dass das Befestigungsmittel 54 Rastgeometrien 58 am Montagefuß 10 aufweist. Diese Rastgeometrien 58 wirken bevorzugt mit geeigneten (nicht gezeigten) Rastgeometrien an der Längsverbindungsstrebe 50 zusammen, sodass über die längsverschiebliche Verbindung zwischen Montagefuß 10 und Längsverbindungsstrebe 50 zahlreiche unterschiedliche Rasteingriffe entstehen. Diese Rasteingriffe sorgen bereits ohne Verschraubung für eine Arretierung in Längsrichtung 28, sodass sich das Montagesystem 26 mit geringem Aufwand ausrichten lässt. Durch ein zusätzliches Einstecken und Anziehen der Schraube wird die bereits vorhandene Arretierung mittels der zusammenwirkenden Rastgeometrien 58 danach lediglich gesichert. Im Übrigen ist durch die Rastgeometrien 58 auch dann noch eine gewisse Arretierung in Längsrichtung 28 gewährleistet, wenn sich einzelne Schrauben des Befestigungsmittels 54 im Laufe der Zeit lockern.

Ferner ist zwischen dem Montagefuß 10 und der Längsverbindungsstrebe 50 ein Anschlag 60 vorgesehen, wobei der Anschlag 60 einen Winkelverstellbereich um eine Mittellage begrenzt, in welcher die Längsverbindungsstrebe 50 parallel zur Standfläche 22 verläuft. Dieser Anschlag 60 ist im vorliegenden Ausführungsbeispiel am Montagefuß 10 ausgebildet (vgl. Figur 5) und weist einen Winkelverstellbereich in der Größenordnung von etwa ±3° um die Mittellage auf (vgl. auch Figur 4). Durch diesen Winkelverstellbereich können Unebenheiten sowie zum Beispiel aus Drainagegründen vorhandene Gefällewechsel des Untergrunds 24 ausgeglichen werden.

Da das Montagesystem 26 starken Temperaturschwankungen unterliegt und sowohl in Längsrichtung 28 als auch in Querrichtung 30 gewöhnlich Abmessungen von mehreren Metern erreicht, sind die auftretenden Dehnungen durch Temperaturänderung beachtlich. Damit diese Temperaturdehnungen nicht zu unerwünscht großen Spannungen innerhalb des Montagesystems 26 führen, können z.B. in Längsrichtung 28 und/oder in Querrichtung 30 eher mittig angeordnete Montagefüße 10 in einer von ihren Standflächen 22 aufgespannten Ebene als Festlager und die übrigen Montagefüße 10 in dieser Ebene als Gleitlager ausgebildet sein. Hierzu sind bevorzugt Gleitschuhe 61, wie in den Figuren 1 und 6 angedeutet, vorgesehen, sodass sich die Montagefüße 10 über ihre Standfläche 22, optionale Gleiteinlagen und die Gleitschuhe 61 am Untergrund 24 abstützen.

Der Montagefuß 10 ist vorzugsweise einstückig in Alu-Druckguss hergestellt. Alternativ ist auch die Verwendung von Kunststoff, insbesondere faserverstärktem Kunststoff oder der Einsatz alternativer Metalle möglich. Aus Kunststoffen lassen sich auch relativ komplexe geometrische Formen wie der Montagefuß 10 mit relativ geringem Aufwand herstellen. Ferner sind für den Montagefuß 10 geeignete Kunststoffe mit ausreichender Festigkeit, Dauerhaftigkeit und Witterungsbeständigkeit vergleichsweise preiswert erhältlich, sodass sich der Montagefuß 10 insgesamt sehr kostengünstig fertigen lässt. Alternativ ist selbstverständlich auch eine mehrteilige Herstellung des Montagefußes 10 denkbar.

Die Figur 6 zeigt den Montagefuß 10", der kein unteres Auflager 18 aufweist und somit am hinteren, das heißt in der Regel nördlichen Ende des Montagesystems 26 zum Einsatz kommt.

Der Montagefuß 10" umfasst den Grundkörper 12, der eine Standfläche 22 hat, mit welcher sich der Montagefuß 10" am Untergrund 24 abstützen kann, den vom Grundkörper 12 nach oben ragenden Schenkel 32 und das obere Auflager 14 für eine erste schräggestellte Modulplatte 16, welches am freien Ende des Schenkels 32 angeordnet ist, wobei der Schenkel 32 ein Lager 62 für das plattenförmige Ballastelement 46 bildet.

Das Lager 62 für das Ballastelement 46 umfasst eine angeformte Abstützfläche 64 im Übergangsbereich zwischen dem Schenkel 32 und dem Grundkörper 12 sowie ein am Schenkel 32 angeformtes seitliches Lager 66. Das seitliche Lager 66 kann gemäß Figur 6 lediglich eine Lagerzunge sein, welche in der oberen Hälfte des Schenkels 32 angeordnet ist und sich ausgehend vom Schenkel 32 in Querrichtung 30 erstreckt. Alternativ ist auch denkbar, dass eine Unterseite des Schenkels 32 insgesamt seitlich verbreitert ist und sich das seitliche Lager 66 durchgehend von der Abstützfläche 64 bis nahe an das freie Ende des Schenkels 32 erstreckt.

Die Figur 7 zeigt eine andere Ansicht des Detailausschnitts gemäß Figur 6, wobei zusätzlich ein Ballastelement 46, ein Kabelkanal 70 in Längsrichtung 28 und ein Kabelkanal 72 in Querrichtung 30 vorgesehen ist. Das Ballastelement 46 zur Beschwerung des Montagesystems 26 ist plattenförmig ausgebildet, insbesondere als Betonplatte, und liegt über einer Stirnseite schräggestellt mit einem unteren Rand 74 auf der Querverbindungsstrebe 52 auf.

Die Querverbindungsstrebe 52 zum Verbinden von zwei in Querrichtung 30 benachbarten Montagefüßen 10, 10" bildet mit anderen Worten ein Linienlager für den unteren Rand 74 der schräggestellten Ballastplatte.

Wie in den Figuren 6 und 7 zu erkennen, liegt die Querverbindungsstrebe 52 dabei auf der angeformten Abstützfläche 64 des Montagefußes 10, 10" auf. Eine gewünschte Bodenfreiheit des Montagesystems 26, beispielsweise zur problemlosen Verlegung des Kabelkanals 70, lässt sich dabei über einen Abstand zwischen der Abstützfläche 64 und der von der Standfläche 22 aufgespannten Ebene einfach einstellen und bereits bei der Fertigung des Montagefußes 10 berücksichtigen. Um auch Zugkräfte in Querrichtung 30 des Montagesystems 26 übertragen zu können, ist vorzugsweise ein Verbindungsmittel 76 vorgesehen, welches die Querverbindungsstrebe 52 am Montagefuß 10, 10" in Querrichtung 30 fixiert. Dieses Verbindungsmittel 76 ist beispielsweise eine Schraube.

Gemäß Figur 7 weist die Querverbindungsstrebe 52 eine Längsnut 78 auf, in die der untere Rand 74 des plattenförmigen Ballastelements 46 eingreift. Die Ballastplatte ist somit durch die Querverbindungsstrebe 52 in Längsrichtung 28 gehalten und stützt sich darüber hinaus am seitlichen Lager 66 ab, um nicht aus der Längsnut 78 herauszukippen.

Vorzugsweise liegt jedes Ballastelement 46 ausschließlich an der Querverbindungsstrebe 52 und an dem seitlich vom Schenkel 32 abstehenden Lager 66 an, sodass es je nach Ausführung des seitlichen Lagers 66 unterschiedliche Möglichkeiten für den Einbau der Ballastelemente 46 gibt.

Ist das seitliche Lager 66 beispielsweise eine angeformte Führungsschiene, die sich im Wesentlichen in Schenkellängsrichtung erstreckt, so ist ein einfaches Einschieben der Ballastelemente 46 von schräg oben möglich. Demgegenüber erlaubt die Ausbildung des seitlichen Lagers 66 als Lagerzunge gemäß Figur 6 zusätzlich ein Einstellen der Ballastplatten von hinten, das heißt von der Nordseite her. Der Vorteil der Führungsschiene liegt in der besonders guten Lagesicherung der Ballastelemente 46, während die Ausführungsvariante mit der Lagerzunge einen besonders schnellen Einbau der Ballastelemente 46 ermöglicht.

Alternativ hierzu ließen sich auch zwei vertikal versetzte Querverbindungsstreben 52 vorsehen, die zusammen das oder die Ballastelemente 46 lagern. So könnte eine untere, z.B. nach oben offene, U-förmige Strebe 52 einen unteren Rand 74 eines Ballastelementes 46 aufnehmen oder umschließen. Zumindest ein Schenkel des "U" würde bei dieser Ausführungsform vorzugsweise länger als bei der gezeigten Ausführungsform ausfallen, um den Rand 74 und die Ballastelemente 46 sicher zu erfassen.

Eine alternativ zusätzlich vorgesehene obere, nicht gezeigte Strebe würde als einfache Anlagefläche gegen Kippen der schräg aufgestellten Ballastelemente 46 wirken oder den oberen Rand der Ballastelement 46 umschließen, z.B. indem ein nach unten offenes U-Profil als obere Strebe verwendet wird.

Das oder die Ballastelemente 46 können somit einerseits nur direkt an den Montagefüßen 10, 10" oder nur an der oder den Querverbindungsstreben 52 gelagert sein oder an den Montagefüßen 10, 10" und zusätzlich der/den Querverbindungsstreben 52.

Im dargestellten Ausführungsbeispiel erstreckt sich das plattenförmige Ballastelement 46 im Wesentlichen in einer Ebene, die durch den Schenkel 32 des Montagefußes 10, 10" und die Querverbindungsstrebe 52 aufgespannt wird, wobei diese Ebene schräg zur Standfläche 22 verläuft. Dadurch lässt sich bei der Fertigung der Montagefüße 10, 10" über die Wahl des Anstellwinkels α des Schenkels 32 sehr einfach auch der Anstellwinkel der plattenförmigen Ballastelemente 46 festlegen. Dies ist besonders dann von Bedeutung, wenn kein separates Windschott 44 vorgesehen ist, sondern die plattenförmigen Ballastelemente 46 die Funktion des Windschotts 44 übernehmen. In diesem Fall beeinflusst der Anstellwinkel der Ballastplatten maßgeblich die Auflagerkräfte des Montagesystems 26 bei Windlast.

Die Ballastelemente 46 als Windschott oder die Ballastelemente 46 samt separater Windschotts 44 müssen nicht bis mindestens zum rückseitigen Rand der Modulplatten 16 ragen, um Winddurchtritt an dieser Stelle zu vermeiden. Es kann gerade zur Erzielung einer geringeren Abhebekraft vorteilhaft sein, wenn niedrigere Ballastelemente 46 und Wndschotts 44 verwendet werden, welche sich nur über 50 bis 90% der Distanz zwischen Querverbindungsstrebe 52 und rückseitigem Rand aufwärts erstrecken. Damit bleibt ein Spalt zwischen dem oberen Rand der Ballastelemente 46 oder den Windschotts 44 und dem Rand des Moduls frei. Alternativ hierzu kann die Querverbindungsstrebe 52 auch höher gesetzt werden, um den Spalt zwischen Untergrund und unterem Rand des Ballastelements 52 und/oder des Windschotts 44 zu vergrößern.

In einer Ausführungsvariante des Montagesystems 26 erstreckt sich das Ballastelement 46 in Querrichtung 30 von einem Montagefuß 10, 10", zu einem benachbarten Montagefuß 10, 10". In diesem Fall wäre die Querverbindungsstrebe 52 als Auflager für das plattenförmige Ballastelement 46 nicht unbedingt nötig, da die Ballastplatte am unteren Rand 74 in ihren Eckbereichen auf den Abstützflächen 64 der Montagefüße 10, 10" aufliegt und zusätzlich durch die seitlichen Lager 66 der Montagefüße 10, 10" gehalten ist.

In einer alternativen Ausführungsvariante gemäß Figur 2 sind in Querrichtung 30 gesehen zwei Ballastelemente 46 zwischen zwei benachbarten Montagefüßen 10, 10" angeordnet. Hierbei wird eine sichere Lagerung der Ballastplatten dadurch erreicht, dass sie in der Längsnut 78 der Querverbindungsstrebe 52 aufgenommen sind und sich zusätzlich am seitlichen Lager 66 des angrenzenden Montagefußes 10, 10" abstützen können. Um die Ballastelemente 46 an ihrem in Querrichtung 30 mittig zwischen den Montagefüßen 10, 10" angeordneten Stoß zusätzlich zu stabilisieren, kann optional ein (nicht dargestelltes) Kopplungselement vorgesehen sein, welches die aneinander angrenzenden Eckbereiche an einem oberen Rand 80 miteinander verbindet. Der Vorteil eines in Querrichtung 30 zwischen zwei Montagefüßen 10, 10" geteilten Ballastelements 46 liegt in den hinsichtlich Handhabung und Gewicht vorteilhafteren Abmessungen der einzelnen Ballastelemente 46.

## Patentansprüche

1. Montagefuß für Solarmodule, mit
einem Grundkörper (12), der wenigstens eine Standfläche (22) hat, mit welcher sich der Montagefuß (10, 10") an einem Untergrund (24) abstützen kann,
einem vom Grundkörper (12) nach oben ragenden Schenkel (32) und
einem oberen Auflager (14) für eine erste schräggestellte Modulplatte (16), welches am Schenkel (32), vorzugsweise an dessen freiem Ende, angeordnet ist,
wobei der Schenkel (32) ein Lager (62) für ein Ballastelement (46), insbesondere eine aufgestellte Platte, bildet und/oder der Montagefuß eine Abstützfläche (64) für eine ein Ballastelement (46) tragende Querverbindungsstrebe (52) zum Verbinden von zwei in einer Querrichtung (30) benachbarten Montagefüßen (10, 10") aufweist.

2. Montagefuß nach Anspruch 1, **dadurch gekennzeichnet, dass** ein mit dem Grundkörper (12) verbundenes, unteres Auflager (18) für eine zur ersten Modulplatte (16) nicht-koplanare, benachbarte, zweite schräggestellte Modulplatte (20) vorgesehen ist.

3. Montagefuß nach Anspruch 1 oder 2, **dadurch gekennzeichnet, dass** das Lager (62) für das Ballastelement (46) eine angeformte Abstützfläche (64), vorzugsweise im Übergangsbereich zwischen dem Schenkel (32) und dem Grundkörper (12), sowie ein am Schenkel (32) angeformtes seitliches Lager (66) umfasst.

4. Montagesystem, insbesondere Flachdach-Montagesystem für Solarmodule, mit
mehreren Montagefüßen (10, 10") nach einem der vorhergehenden Ansprüche, sowie
wenigstens einem Ballastelement (46) zur Beschwerung des Montagesystems (26),
wobei das wenigstens eine Ballastelement (46) am Schenkel (32) der Montagefüße (10, 10") und/oder an wenigstens einer Querverbindungsstrebe (52) zum Verbinden von zwei in einer Querrichtung (30) benachbarten Montagefüßen (10, 10") gelagert ist.

5. Montagesystem nach Anspruch 4, **dadurch gekennzeichnet, dass** die Querverbindungsstrebe (52) ein Lager für einen unteren Rand (74) des Ballastelements (46) bildet.

6. Montagesystem nach Anspruch 5, **dadurch gekennzeichnet, dass** die Querverbindungsstrebe (52) auf einer angeformten Abstützfläche (64) des Montagefußes (10, 10") aufliegt.

7. Montagesystem nach Anspruch 5 oder 6, **dadurch gekennzeichnet, dass** der untere Rand (74) des Ballastelements (46) in eine Längsnut (78) der Querverbindungsstrebe (52) eingreift.

8. Montagesystem nach einem der Ansprüche 5 bis 7, **dadurch gekennzeichnet, dass** das Ballastelement (46) plattenförmig, insbesondere als Betonplatte ausgebildet ist und auf einer Stirnseite aufgestellt auf der Querverbindungsstrebe (52) aufliegt.

9. Montagesystem nach einem der Ansprüche 5 bis 7 und Anspruch 8, **dadurch gekennzeichnet, dass** sich das plattenförmige Ballastelement (46) im wesentlichen in einer Ebene erstreckt, die durch den Schenkel (32) des Montagefußes (10, 10") und die Querverbindungsstrebe (52) aufgespannt wird, wobei die Ebene vorzugsweise schräg zur Standfläche (22) verläuft.

10. Montagesystem nach einem der Ansprüche 4 bis 9, **dadurch gekennzeichnet, dass** sich das Ballastelement (46) in Querrichtung (30) von einem Montagefuß (10, 10") zu einem benachbarten Montagefuß (10, 10") erstreckt.

11. Montagesystem nach einem der Ansprüche 4 bis 10, **dadurch gekennzeichnet, dass** in Querrichtung (30) gesehen zwei Ballastelemente (46) zwischen zwei benachbarten Montagefüßen (10, 10") angeordnet sind.

12. Montagesystem nach einem der Ansprüche 5 bis 11, **dadurch gekennzeichnet, dass** das oder die Ballastelemente (46) nur an der Querverbindungsstrebe (52) und zusätzlich an einem seitlich von dem Schenkel (32) abstehenden Lager (66) oder insgesamt nur an wenigstens einer Querverbindungsstrebe (52) anliegt.
